# FASCICULE DE BREVET EUROPEEN

(11) **EP 1 481 858 B1**
(45) Date de publication et mention de la délivrance du brevet: **12.09.2007**
(21) Numéro de dépôt: 04291310.3
(22) Date de dépôt: 24.05.2004
(51) Int. Cl.: B60S 1/04

(54) **Dispositif de positionnement et de fixation d'un mécanisme d'essuie-vitre sur une partie de caisse de véhicule automobile, et véhicule automobile muni d'un tel dispositif**
Anordnung zur Positionierung und Befestigung einer Scheibenwischervorrichtung auf einem Fahrzeugkarosserieteil und Fahrzeug mit einer solchen Anordnung
Arrangement for positioning and fastening a windscreen wiper device on a vehicle body part and vehicle with such an arrangement

(30) Priorité: 28.05.2003 FR 0306526; 28.05.2003 FR 0306527; 28.05.2003 FR 0306528; 28.05.2003 FR 0306529; 28.05.2003 FR 0306533
(43) Date de publication de la demande: 01.12.2004
(73) Titulaire: Peugeot Citroën Automobiles S.A., 78140 Vélizy Villacoublay (FR)
(72) Inventeur: Jeuffe, Gérard, 78810 Feucherolles (FR)
(74) Mandataire: Blot, Philippe Robert Emile

(56) Documents cités:
- EP-A- 1 040 972
- EP-A- 1 291 254
- DE-A- 10 155 269
- US-B1- 6 168 223

## Description

La présente invention concerne un dispositif de positionnement et de fixation d'un mécanisme d'essuie-vitre sur une partie de caisse de véhicule automobile, selon le préambule de la revendication 1. Un tel dispositif est par exemple connu de EP-A-1 291 254.

Généralement, les dispositifs de positionnement et de fixation connus de ce type comprennent trois paires vis/écrou assurant une fixation rigide du mécanisme en trois points de la partie de caisse, et éventuellement une languette d'indexage permettant de centrer le mécanisme préalablement au serrage des trois paires vis/écrou.

De tels dispositifs de fixation ne donnent pas entière satisfaction.

En effet, ils rendent le montage du mécanisme sur la partie de caisse relativement complexe, puisque l'opérateur doit positionner le mécanisme, et procéder au serrage des trois paires successivement, tout en maintenant le mécanisme en position. Ainsi, le montage du mécanisme d'essuie-vitre représente une durée d'opération relativement importante, nécessite un outillage à la disposition de l'opérateur, ainsi qu'une certaine dextérité de ce dernier pour assurer un montage correct.

En outre, une fixation rigide par des vis et des écrous du mécanisme d'essuie-vitre sur la caisse est difficilement compatible avec certains objectifs de sécurité, actuellement poursuivis par de nombreux constructeurs automobiles, consistant à minimiser les blessures causées à un piéton en cas de choc. A la base de cette tendance, certaines normes ou spécifications visent à réduire la résistance au choc des fixations d'organes saillants du véhicule, ce qui est le cas des mécanismes d'essuie-vitre. On a constaté en effet qu'un mécanisme d'essuie-vitre pouvait causer de graves blessures à un piéton lors d'un choc, lorsque celui-ci est projeté sur le capot du véhicule. Or, la fixation d'un mécanisme d'essuie-vitre sur la caisse par des vis et des écrous laisse peu de possibilités au concepteur de diminuer la résistance au choc du mécanisme.

L'invention a notamment pour objet de faciliter le montage d'un mécanisme d'essuie-vitre sur une caisse de véhicule, tout en assurant une fixation et un positionnement satisfaisants. Elle a également pour objet de permettre des aménagements particuliers pour se conformer aux normes et spécifications en matière de sécurité en cas de choc piéton.

A cet effet, un dispositif selon l'invention est conforme à la revendication 1.

Des caractéristiques optionnelles de l'invention sont exposées dans les revendications dépendantes 2 à 24.

L'invention vise également un véhicule automobile équipé d'un dispositif de positionnement et de fixation d'un mécanisme d'essuie-vitre sur une partie de caisse, tel que décrit précédemment.

Des modes particuliers de réalisation de l'invention vont maintenant être décrits en référence aux Figures des dessins annexés, sur lesquels :
- la Figure 1 est une vue en perspective d'un mécanisme d'essuie-vitre et d'un dispositif conforme à un premier mode de réalisation de l'invention, en configuration non-assemblée ;
- la Figure 2 est une vue analogue en configuration assemblée ;
- la Figure 3 est une vue en coupe schématique, dans un plan axial, d'une paire d'éléments de fixation, en configuration assemblée de la Figure 2 ;
- la Figure 4 est une vue en perspective à plus grande échelle d'un manchon de fixation représenté sur les Figures 1 à 3 ;
- la Figure 5 est une vue analogue à la Figure 3, après rupture d'une partie d'un manchon de fixation, consécutivement à un choc du mécanisme d'essuie-vitre avec un piéton ;
- la Figure 6 est une vue analogue à la Figure 4 d'un manchon selon une variante de réalisation ;
- la Figure 7 est une vue en coupe dans un plan axial du manchon de la Figure 6 ;
- la Figure 8 est une vue en perspective d'un mécanisme d'essuie-vitre et d'un dispositif conforme à un deuxième mode de réalisation de l'invention, en configuration assemblée ;
- la Figure 9 est une vue de dessus de la partie située à droite du mécanisme et du dispositif représentés sur la Figure 8 ;
- la Figure 10 est une vue partielle en perspective de la partie du dispositif de fixation représentée sur la Figure 9, en configuration non assemblée;
- la Figure 11 est une vue partielle de côté, dans la direction D, de la partie du dispositif de fixation représentée sur la Figure 9, en configuration assemblée ;
- la Figure 12 est une vue de section de la Figure 9, selon la ligne 12-12 ;
- la Figure 13 est une vue de section de la Figure 9, selon la ligne 13-13 ; et
- la Figure 14 est une vue analogue à la Figure 13, après rupture de l'organe intermédiaire frangible, consécutivement à un choc du mécanisme d'essuie-vitre avec un piéton.

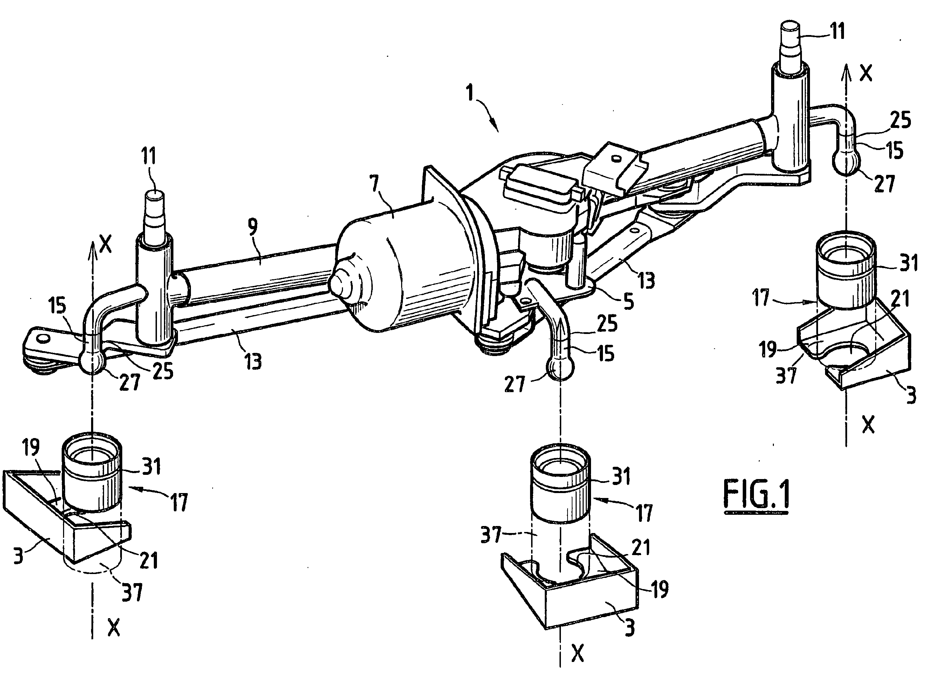

Sur la Figure 1, on a représenté un mécanisme 1 d'essuie-vitre pour véhicule automobile et trois supports rigides 3 de fixation, solidaires d'une partie de caisse de véhicule automobile (non représentée). Ces supports sont, par exemple, réalisés en tôle et soudés sur la caisse.

Le mécanisme 1 comporte essentiellement :
- une platine de support 5 centrale,
- un moteur d'entraînement 7 monté sur la platine 5,
- une barre transversale 9 s'étendant de part et d'autre de la platine 5,
- deux arbres 11 montés rotatifs chacun à une extrémité de la barre 9, et destinés à entraîner chacun un balai d'essuie-glace en rotation, et
- une tringlerie 13 prévue pour transmettre le mouvement d'entraînement du moteur 7 à chacun des arbres 11.

Le mécanisme 1 comporte en outre trois éléments de fixation mâles 15 solidaires de la barre transversale 9, qui font saillie respectivement à chaque extrémité de la barre 9, au voisinage de l'arbre respectif 11, et de la platine 5 au voisinage du moteur 7.

De façon correspondante, chaque support rigide 3 solidaire de la partie de caisse est muni d'un bloc-porteur 17, complémentaire de l'élément de fixation mâle respectif 15, et formant avec le support rigide 3 un élément de fixation femelle. Les trois paires d'éléments de fixation mâles 15 et femelles 3, 17 définissent ensemble le dispositif de fixation et de positionnement du mécanisme 1 sur la partie de caisse.

Chaque support rigide 3 comprend une partie plane 19, dans laquelle est formé un collier 21 en arc de cercle, complémentaire du bloc-porteur 17.

Chaque paire d'éléments de fixation, formée d'une part de l'élément de fixation mâle 15 et d'autre part de l'élément de fixation femelle 3, 17, forme une liaison par enclenchement élastique selon une même direction d'enclenchement, déterminée par l'axe commun X de l'élément mâle 15, du bloc-porteur creux 17, et du collier 21 formé dans le support rigide 3.

Dans tout ce qui suit, les éléments constitutifs du dispositif de fixation et du mécanisme d'essuie-vitre sont supposés dans leur disposition correspondant à la configuration assemblée du mécanisme d'essuie-vitre sur la caisse du véhicule. Dans cette configuration, l'axe X sera supposé quasiment vertical et orienté du bas vers le haut.

L'extrémité libre de l'élément de fixation mâle 15 est dirigée vers l'élément de caisse, de sorte que la direction d'enclenchement est orientée sensiblement de l'extérieur vers l'intérieur de la caisse.

L'élément mâle 15 est constitué, dans l'exemple représenté, d'un bras cylindrique 25 de raccordement à la platine 5 ou à la barre transversale 9, et à son extrémité libre, d'une rotule 27 destinée à s'engager avec coopération de forme dans le bloc-porteur 17.

Le bloc-porteur 17 est de forme extérieure essentiellement cylindrique avec une rainure 31 périphérique destinée à recevoir le collier 21 par engagement à force, de façon à assurer la fixation du bloc-porteur 17 sur le support rigide 3.

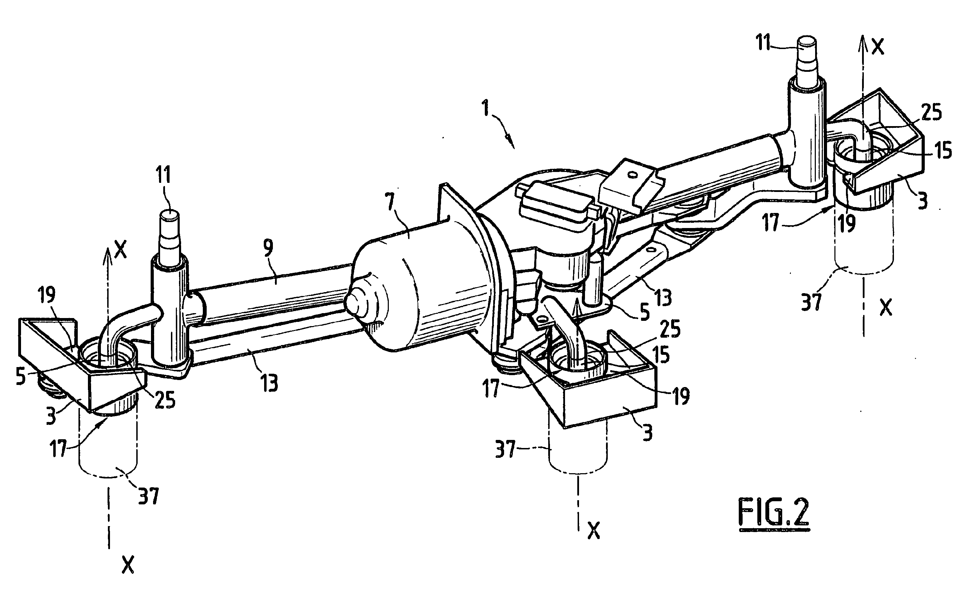

Sur la Figure 2, on a représenté le mécanisme d'essuie-vitre 1 tel que monté sur la partie de caisse, c'est-à-dire dans la configuration assemblée du dispositif de fixation, constitué des éléments de fixation mâle 15 et des éléments de fixation femelle 3, 17 respectifs.

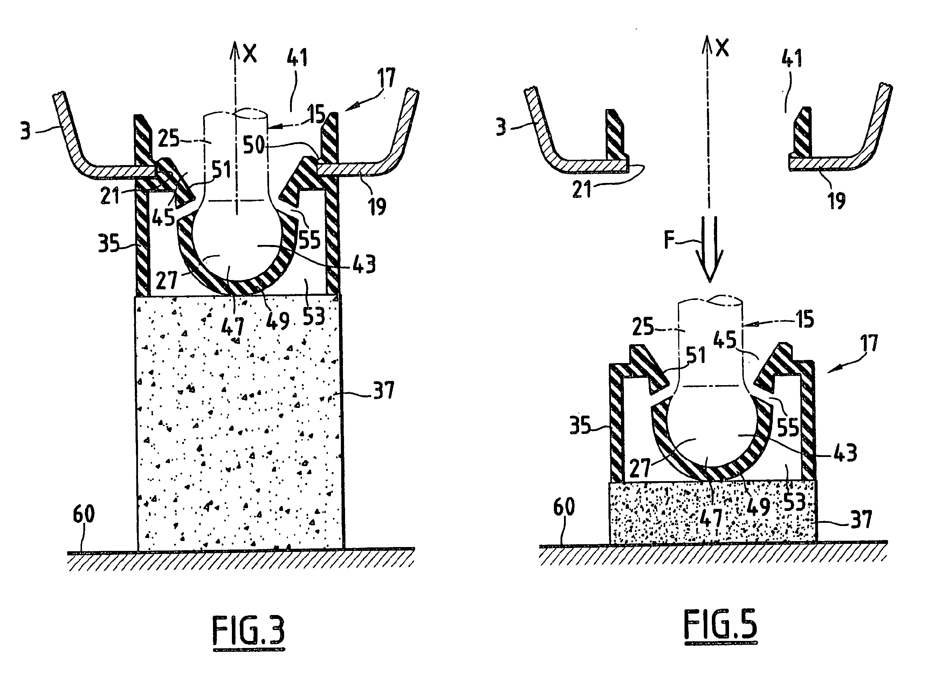

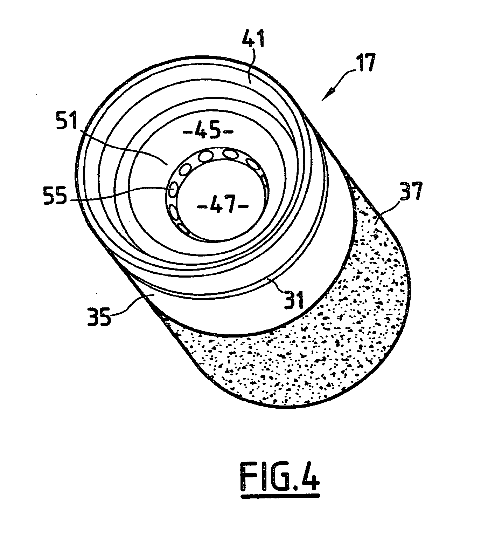

En référence aux Figures 3 et 4, on va à présent décrire avec plus de précision le bloc-porteur 17, et le mode d'assemblage de ce bloc-porteur avec l'élément de fixation mâle 15.

Le bloc-porteur 17 comprend un manchon cylindrique creux 35 en matériau élastique, par exemple caoutchouc, et un bloc d'amortissement cylindrique 37, en matériau compressible de type mousse. Le bloc d'amortissement 37 est coaxial avec le manchon 35, et fixé à son extrémité inférieure, dans son prolongement.

Le manchon 35 présente, à son extrémité supérieure, une ouverture 41 d'insertion de l'élément mâle 15. L'ouverture 41 donne accès à un évidement principal 43 intérieur au manchon, qui présente une partie supérieure 45 évasée et une partie inférieure 47, obturée par une paroi 49 de fond du manchon.

L'entrée de l'évidement principal, définie par l'ouverture 41 et la partie supérieure 45, est évasée vers le haut avec une forme tronconique, de façon à assurer le guidage de l'élément mâle 15 lors de son insertion dans le manchon 35.

Dans la face interne tronconique du manchon 35 est formée une gorge périphérique 50, dont le fond s'étend au voisinage du fond de la rainure 31.

La partie inférieure 47 de l'évidement est de forme complémentaire de celle de la rotule 27. La paroi de fond 49 définit une butée d'insertion axiale du premier élément 15 dans le bloc porteur 17.

Dans une partie interne intermédiaire, le manchon 35 présente un resserrement 51 vers l'axe X, formant col d'entrée. Ce col 51 donne accès à la partie inférieure 47 de l'évidement suivant la direction d'enclenchement X. Le col 51, lors de l'insertion de l'élément mâle 15, se déforme élastiquement radialement au passage de la rotule 27 et, lorsque la rotule 27 se loge dans la partie inférieure 47 de l'évidement, définit un cran d'enclenchement de l'élément mâle 15 dans le bloc porteur 17.

D'autre part, un évidement 53 périphérique par rapport à l'évidement principal 43, ouvert sur la partie inférieure du manchon 35, est formé dans ce dernier.

Le manchon est pourvu d'une série de passages 55, répartis régulièrement sur la périphérie de la paroi interne qui délimite l'évidement principal 43. Ces passages 55 sont tubulaires et inclinés radialement du haut vers le bas. Ils mettent en communication l'évidement principal 43 et l'évidement périphérique 53, de manière à permettre l'évacuation d'eau de l'intérieur vers l'extérieur du manchon.

Naturellement, le bras cylindrique 25, la rotule 27 et la disposition des passages 55 sont prévus de façon qu'en position d'enclenchement de l'élément mâle 15 dans le manchon 35, ni la tige 25, ni la rotule 27 n'obturent les passages 55.

Comme représenté sur la Figure 3, le bloc d'amortissement 37 repose par sa surface inférieure, en position montée du mécanisme d'essuie-vitre, sur une surface plane d'appui de la partie de caisse, schématisée sous la référence 60.

A la lecture de la description qui précède, on comprend que le montage du mécanisme d'essuie vitre 1 sur la partie de caisse est d'une grande simplicité : il suffit à l'opérateur de présenter le mécanisme d'essuie-vitre avec les rotules 27 au droit des ouvertures 41 des blocs porteurs 17 respectifs, et à presser le mécanisme 1 pratiquement de haut en bas, selon l'axe X, pour introduire les rotules 27 dans les parties d'évidement 47 correspondantes. Après le passage du point dur correspondant au col 51, passage ressenti par l'opérateur, le dispositif de fixation est dans la position enclenchée.

Du fait de la souplesse relative des blocs porteurs 17, les tolérances de positionnement relatif des éléments mâles 15 sur le mécanisme d'essuie vitre 1 sont compensées. Le dispositif est dit « auto-centreur ». En outre, les vibrations apparaissant sur le véhicule sont en grande partie absorbées par les manchons élastiques 35.

Bien entendu, pour la stabilité de la fixation, les trois paires d'éléments de fixation ne sont, de préférence, pas alignées.

Le démontage du mécanisme d'essuie-vitre est rendu extrêmement simple puisqu'il suffit de retirer, par un simple effort de traction, le mécanisme 1 des blocs porteurs 17. La fiabilité de la fixation n'est pas altérée, le mécanisme d'essuie-vitre 1 ne subissant pas, en fonctionnement normal, d'efforts significatifs dirigés vers le haut.

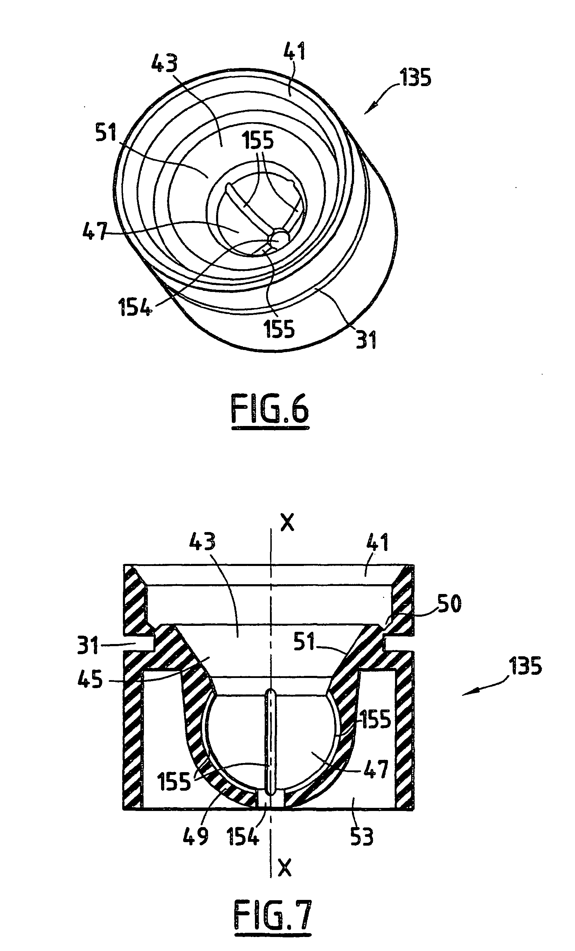

En référence à la Figure 5, on va à présent décrire le comportement du dispositif de fixation lorsque se produit un choc sur le mécanisme d'essuie-vitre 1, dont une composante d'effort est dirigée suivant l'axe d'enclenchement X, du haut vers le bas.

On comprend que la gorge 50 formée sur toute la périphérie de la paroi intérieure du manchon 35, définit une région d'affaiblissement du manchon, correspondant à la section de moindre épaisseur entre le fond de la gorge 50 et la surface extérieure du manchon 35, plus précisément le fond de la rainure 31. Ainsi, la gorge 50 et la rainure 31 définissent entre elles une région frangible.

Un choc sur le mécanisme 1 avec une composante axiale dirigée vers le bas produit un enfoncement de l'élément mâle 15 qui, venant en butée avec la paroi de fond 49 du manchon, déforme ce dernier en l'étirant. Simultanément, le bloc d'amortissement 37 est sollicité en compression.

Lorsque la composante axiale de l'effort F dépasse un seuil prédéterminé, la déformation du manchon 35 conduit à un déchirement de ce dernier au niveau de la gorge 50 et de la rainure périphérique 31, cette dernière étant engagée initialement sur le collier rigide 21 du support 3.

La situation de rupture du manchon 35 au niveau de sa région frangible, sous un choc à composante axiale dépassant un seuil prédéterminé, est celle illustrée sur la Figure 5.

Le dispositif est par exemple prévu pour pouvoir subir une compression des blocs 37 d'environ 40 mm.

L'avantage d'un tel dispositif est d'augmenter la sécurité d'un piéton heurté par le véhicule, qui viendrait à frapper le mécanisme d'essuie-vitre. Lorsqu'un tel choc se produit, avec le dispositif de positionnement et de fixation selon l'invention, le mécanisme d'essuie-vitre peut s'escamoter dans une partie creuse de la caisse, par rupture d'une partie du dispositif de fixation.

Le choc est alors amorti par la compression du bloc d'amortissement 37.

Concernant la maintenance du véhicule, après un tel choc sur le mécanisme d'essuie vitre 1, ce dernier n'est pas endommagé et, dans le dispositif de fixation, seuls les blocs porteurs 17 sont endommagés et doivent être remplacés.

En référence aux Figures 6 et 7, on va à présent décrire un manchon de bloc porteur selon une variante de réalisation.

Ce manchon 135 diffère essentiellement du manchon 35 décrit en référence aux Figures 3 à 5, en ce que les passages d'évacuation d'eau sont définis par un orifice central 154 formé dans la paroi de fond 49 du manchon et par une série de gorges 155 débouchant dans ledit orifice 154 en convergeant vers ce dernier. Dans l'exemple représenté, la paroi de fond 49 a une forme intérieure sphérique et les gorges 155 s'étendent de façon circonférentielle, à partir de l'entrée de la partie inférieure 47 de l'évidement principal 43, jusqu'à l'orifice central axial 154. Chaque gorge 155 s'étend essentiellement dans un plan axial du manchon. Les gorges 155 sont ici au nombre de quatre, réparties sur la face interne de la paroi de fond 49, de façon régulière autour de l'axe X du manchon.

On comprend que, lorsque la rotule 27 de l'élément mâle 15 est engagée dans la partie complémentaire de l'évidement 47, de l'eau introduite dans l'évidement principal 43 peut s'écouler par gravité autour de la rotule 27 dans les gorges 155, et sortir à l'extérieur du manchon par l'orifice 154.

Comme dans le mode de réalisation précédent, le manchon 135 peut être associé à un bloc d'amortissement compressible 37, lequel peut être en outre adapté pour faciliter l'évacuation de l'eau extraite du manchon vers l'extérieur du bloc porteur.

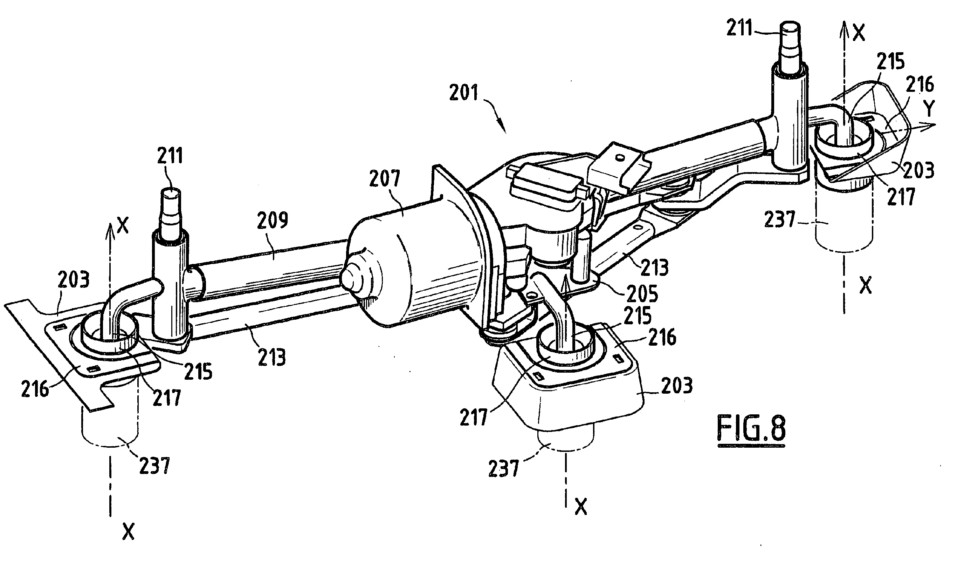

Sur la Figure 8, on a représenté un mécanisme 201 d'essuie-vitre pour véhicule automobile et trois supports rigides 203 de fixation, solidaires d'une partie de caisse de véhicule automobile (non représentée). Ces supports sont, par exemple, réalisés en tôle et soudés sur la caisse.

Le mécanisme 201 comporte essentiellement :
- une platine de support 205 centrale,
- un moteur d'entraînement 207 monté sur la platine 205,
- une barre transversale 209 s'étendant de part et d'autre de la platine 205,
- deux arbres 211 montés rotatifs chacun à une extrémité de la barre 209, et destinés à entraîner chacun un balai d'essuie-glace en rotation, et
- une tringlerie 213 prévue pour transmettre le mouvement d'entraînement du moteur 207 à chacun des arbres 211.

Le mécanisme 201 comporte en outre trois éléments de fixation mâles 215 solidaires de la barre transversale 209, qui font saillie respectivement à chaque extrémité de la barre 209, au voisinage de l'arbre respectif 211, et de la platine 205 au voisinage du moteur 207.

De façon correspondante, chaque support rigide 203 solidaire de la partie de caisse est muni d'un bloc-porteur 217, complémentaire de l'élément de fixation mâle respectif 215, et d'une plaque de fixation intermédiaire 216, qui forment, avec le support rigide 203, un élément de fixation femelle. Les trois paires d'éléments de fixation mâles 215 et femelles 203, 216, 217 définissent ensemble le dispositif de fixation et de positionnement du mécanisme 201 sur la partie de caisse.

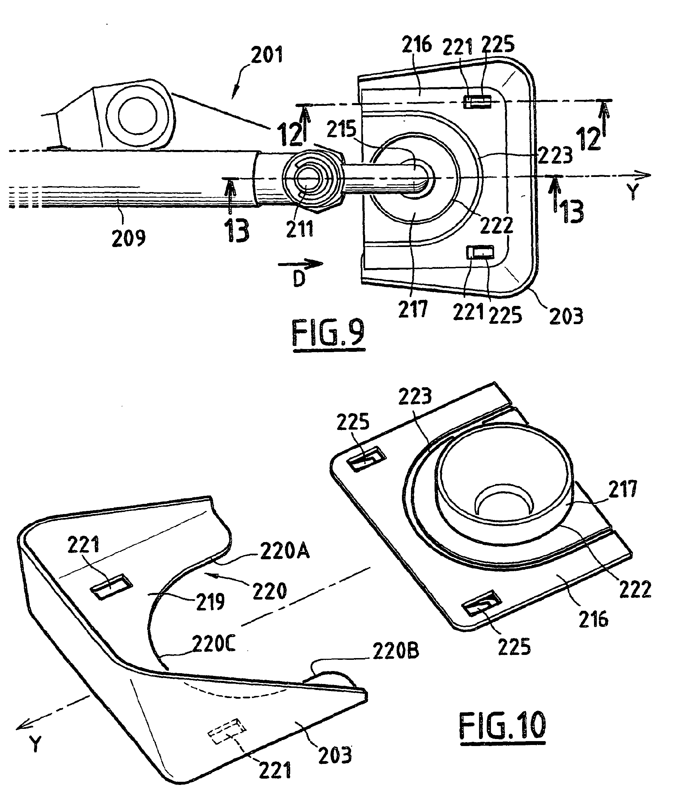

On se réfère à présent plus particulièrement aux Figures 9 à 13, pour décrire de façon plus précise l'un des éléments de fixation femelle 203, 216, 217, les deux autres étant de constitution analogue, voire identique, et ne nécessitant pas de description supplémentaire.

Le support rigide 203 comprend une partie plane 219, dans laquelle est formée une échancrure 220 avec deux bords parallèles d'entrée 220A, 220B et un fond 220C.

L'échancrure 220 est de dimension suffisante pour pouvoir recevoir le bloc porteur 217. Sur la partie plane 219, sont également ménagées deux lumières 221, de part et d'autre de l'échancrure 220.

La plaque de fixation intermédiaire 216 présente une ouverture 222 au travers de laquelle s'étend le bloc porteur 217. Le bloc porteur 217 est fixé sur la plaque 216. Par exemple, la plaque 216 est réalisée en matière plastique moulée, le bloc porteur 217 étant surmoulé, éventuellement monté, sur la plaque intermédiaire 216 préalablement formée.

La plaque 216 est formée avec une ligne 223 d'affaiblissement, c'est-à-dire en l'occurrence de moindre épaisseur, qui définit une ligne frangible. Cette ligne 223 est une ligne de rupture privilégiée en cas de choc, formée de façon périphérique par rapport au bloc porteur 217 et à l'ouverture 222. Elle a, dans l'exemple représenté, une forme correspondante à celle de l'échancrure 220.

La plaque 216 comporte en outre des moyens de fixation sur le support rigide 203, ces moyens de fixation comprenant d'une part des moyens de guidage sous la forme de glissières parallèles 224A, 224B, pouvant s'engager respectivement avec les bords 220A, 220B, et d'autre part des moyens d'encliquetage sous la forme d'une paire de pattes élastiques 225, prévues pour coopérer respectivement avec les lumières 221.

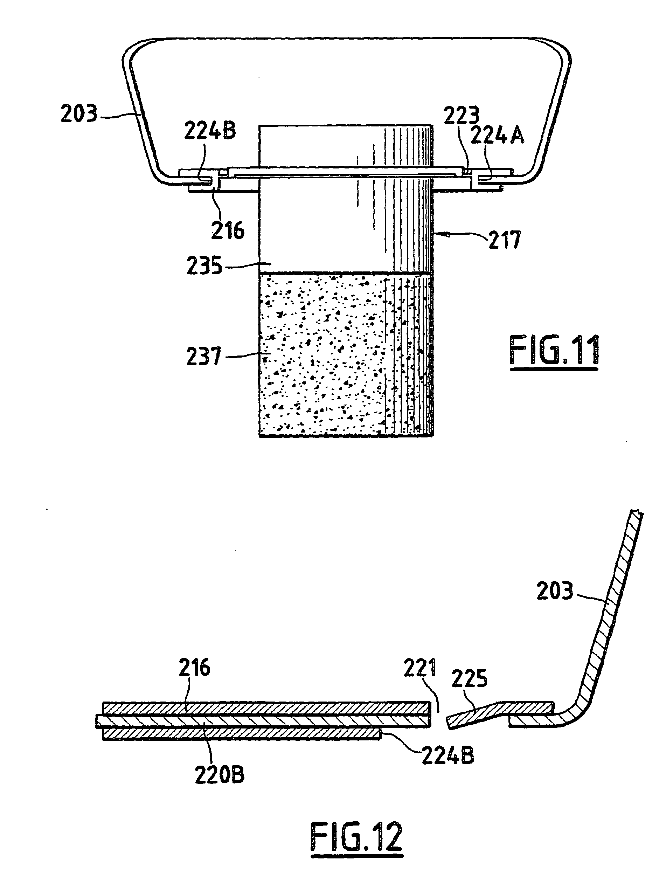

On comprend que la fixation de la plaque intermédiaire 216, munie du bloc porteur 217, sur le support rigide 203, se fait de la façon suivante : on engage les glissières 224A, 224B sur les bords respectifs 220A, 220B, et on fait glisser la plaque 216 sur la partie plane 219 du support rigide 203, jusqu'à ce que les pattes élastiques 225 tombent dans les lumières respectives 221 pour s'opposer au retrait de la plaque 216 du support rigide 203, et ainsi définir la position d'encliquetage. Cette position d'encliquetage de la plaque intermédiaire 216 sur le support rigide 203 est notamment illustrée par la section de la Figure 12.

Les bords 220A, 220B et les glissières de guidage 224A, 224B sont dirigés selon une direction Y définissant la direction d'encliquetage de la plaque intermédiaire 216 sur le support rigide 203. Cette direction d'encliquetage Y est sensiblement orthogonale à l'axe commun X de l'élément mâle 215, et du bloc-porteur creux 217.

Chaque paire d'éléments de fixation du dispositif, formée d'une part de l'élément de fixation mâle 215, et d'autre part de l'élément de fixation femelle 203, 216, 217, forme une liaison par enclenchement élastique selon la même direction X.

Dans tout ce qui suit, les éléments constitutifs du dispositif de fixation et du mécanisme d'essuie-vitre sont supposés dans leur disposition correspondant à la configuration assemblée du mécanisme d'essuie-vitre sur la caisse du véhicule. Dans cette configuration, l'axe X sera supposé quasiment vertical et orienté du bas vers le haut.

L'extrémité libre de l'élément de fixation mâle 215 est dirigée vers l'élément de caisse, de sorte que la direction d'enclenchement est orientée sensiblement de l'extérieur vers l'intérieur de la caisse.

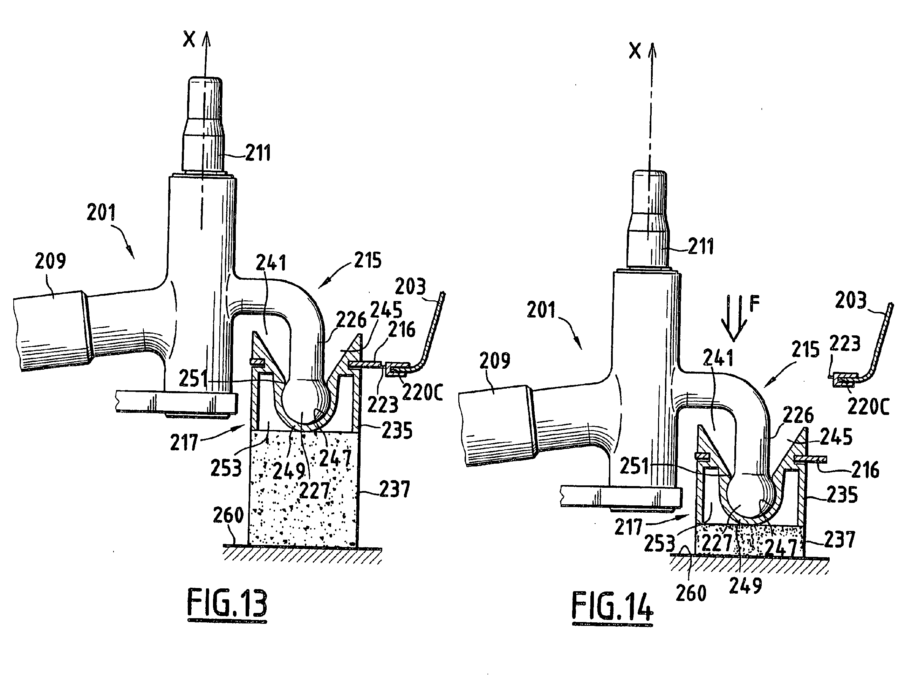

On se réfère à présent plus particulièrement à la Figure 13.

L'élément mâle 215 est constitué, dans l'exemple représenté, d'un bras cylindrique 226 de raccordement à la platine 205 ou à la barre transversale 209, et à son extrémité libre, d'une rotule 227 destinée à s'engager avec coopération de forme dans le bloc-porteur 217.

On va à présent décrire avec plus de précision le bloc-porteur 217, et le mode d'assemblage de ce bloc-porteur avec l'élément de fixation mâle 215.

Le bloc-porteur 217 comprend un manchon cylindrique creux 235 en matériau élastique, par exemple caoutchouc, et un bloc d'amortissement cylindrique 237, en matériau compressible de type mousse. Le bloc d'amortissement 237 est coaxial avec le manchon 235, et fixé à son extrémité inférieure, dans son prolongement.

Le manchon 235 présente, à son extrémité supérieure, une ouverture 241 d'insertion de l'élément mâle 215. L'ouverture 241 donne accès à un évidement principal 243 intérieur au manchon, qui présente une partie supérieure 245 évasée et une partie inférieure 247, obturée par une paroi 249 de fond du manchon.

L'entrée de l'évidement principal, définie par l'ouverture 241 et la partie supérieure 245, est évasée vers le haut avec une forme tronconique, de façon à assurer le guidage de l'élément mâle 215 lors de son insertion dans le manchon 235.

La partie inférieure 247 de l'évidement est de forme complémentaire de celle de la rotule 227. La paroi de fond 249 définit une butée d'insertion axiale du premier élément 215 dans le bloc porteur 217.

Dans une partie interne intermédiaire, le manchon 235 présente un resserrement 251 vers l'axe X, formant col d'entrée. Ce col 251 donne accès à la partie inférieure 247 de l'évidement suivant la direction d'enclenchement X. Le col 251, lors de l'insertion de l'élément mâle 215, se déforme élastiquement radialement au passage de la rotule 227 et, lorsque la rotule 227 se loge dans la partie inférieure 247 de l'évidement, définit un cran d'enclenchement de l'élément mâle 215 dans le bloc porteur 217.

D'autre part, un évidement 253 périphérique par rapport à l'évidement principal 243, ouvert sur la partie inférieure du manchon 235, est formé dans ce dernier.

Comme représenté sur la Figure 13, le bloc d'amortissement 237 repose par sa surface inférieure, en position montée du mécanisme d'essuie-vitre, sur une surface plane d'appui de la partie de caisse, schématisée sous la référence 260.

A la lecture de la description qui précède, on comprend que le montage du mécanisme d'essuie vitre 201 sur la partie de caisse, une fois montées les plaques intermédiaires 216 sur les supports rigides 203 respectifs, est d'une grande simplicité : il suffit à l'opérateur de présenter le mécanisme d'essuie-vitre avec les rotules 227 au droit des ouvertures 241 des blocs porteurs 217 respectifs, et à presser le mécanisme 201 pratiquement de haut en bas, selon l'axe X, pour introduire les rotules 227 dans les parties d'évidement 247 correspondantes. Après le passage du point dur correspondant au col 251, passage ressenti par l'opérateur, le dispositif de fixation est dans la position enclenchée.

Du fait de la souplesse relative des blocs porteurs 217, les tolérances de positionnement relatif des éléments mâles 215 sur le mécanisme d'essuie vitre 201 sont compensées. Le dispositif est dit « auto-centreur ». En outre, les vibrations apparaissant sur le véhicule sont en grande partie absorbées par les manchons élastiques 235.

Bien entendu, pour la stabilité de la fixation, les trois paires d'éléments de fixation ne sont, de préférence, pas alignées.

Le démontage du mécanisme d'essuie-vitre est rendu extrêmement simple puisqu'il suffit de retirer, par un simple effort de traction, le mécanisme 201 des blocs porteurs 217. La fiabilité de la fixation n'est pas altérée, le mécanisme d'essuie-vitre 201 ne subissant pas, en fonctionnement normal, d'efforts significatifs dirigés vers le haut.

En référence aux Figures 13 et 14, on va à présent décrire le comportement du dispositif de fixation lorsque se produit un choc sur le mécanisme d'essuie-vitre 201, dont une composante d'effort est dirigée suivant l'axe d'enclenchement X, du haut vers le bas. L'état initial du dispositif est représenté sur la Figure 13.

Un choc sur le mécanisme 201 avec une composante axiale dirigée vers le bas produit un enfoncement de l'élément mâle 215 qui, venant en butée avec la paroi de fond 249 du manchon, déforme ce dernier en l'étirant. Simultanément, le bloc d'amortissement 237 est sollicité en compression.

Lorsque la composante axiale de l'effort F dépasse un seuil prédéterminé, l'effort transmis à la plaque intermédiaire 216 conduit à la rupture de cette dernière au niveau de la ligne frangible 223. La situation de rupture de la plaque intermédiaire 216 au niveau de sa région frangible, sous un choc à composante axiale dépassant un seuil prédéterminé, est celle illustrée sur la Figure 14.

Le dispositif est par exemple prévu pour pouvoir subir une compression des blocs 237 d'environ 40 mm.

L'avantage d'un tel dispositif est d'augmenter la sécurité d'un piéton heurté par le véhicule, qui viendrait à frapper le mécanisme d'essuie-vitre. Lorsqu'un tel choc se produit, avec le dispositif de positionnement et de fixation selon l'invention, le mécanisme d'essuie-vitre peut s'escamoter dans une partie creuse de la caisse, par rupture d'une partie du dispositif de fixation.

Le choc est alors amorti par la compression du bloc d'amortissement 237.

Concernant la maintenance du véhicule, après un tel choc sur le mécanisme d'essuie-vitre 201, ce dernier n'est pas endommagé et, dans le dispositif de fixation, seules les plaques intermédiaires 216 sont endommagées et doivent être remplacées, solidairement avec les blocs porteurs 217.

## Revendications

1. Dispositif de positionnement et de fixation d'un mécanisme d'essuie-vitre sur une partie de caisse de véhicule automobile, comprenant trois paires d'éléments de fixation fonctionnant par enclenchement élastique, chacune comprenant un premier élément de fixation (15 ; 215) solidaire du mécanisme d'essuie-vitre (1 ; 201), et un deuxième élément de fixation (3, 17 ; 203, 216, 217) solidaire de la partie de caisse (60 ; 260), lesdites paires formant des liaisons par enclenchement élastique selon une même direction d'enclenchement (X), notamment une direction sensiblement orientée de l'extérieur vers l'intérieur de la caisse, le deuxième élément (3, 17 ; 203, 216, 217) comprenant un support rigide de fixation (3 ; 203), solidaire de la partie de caisse (60 ; 260), et un bloc porteur (17 ; 217) fixé audit support (3 ; 203) et réalisé dans au moins un matériau plus souple, **caractérisé en ce que** le bloc porteur (17) est fixé au support rigide (3) de façon à pouvoir s'en détacher au moins partiellement sous l'effet d'un choc sur le mécanisme d'essuie-vitre (1), dont l'intensité dépasse un seuil prédéterminé, et **en ce que** le support rigide de fixation (3) présente une ouverture dont le bord forme un collier (21), tandis que le bloc porteur (17) comporte extérieurement une rainure périphérique (31) pouvant s'engager dans le collier (21) pour réaliser la fixation du bloc porteur (17) sur le support rigide (3).

2. Dispositif suivant la revendication 1, **caractérisé en ce que** les trois paires d'éléments de fixation sont agencées de telle sorte à définir trois points de fixation non alignés.

3. Dispositif suivant la revendication 1 ou 2, **caractérisé en ce que** les premier (15 ; 215) et deuxième (3, 17 ; 203, 216, 217) éléments de fixation d'une même paire ont des parties complémentaires (27, 47 ; 227, 247) dont la forme est de révolution par rapport à la direction d'enclenchement (X).

4. Dispositif suivant l'une quelconque des revendications 1 à 3, **caractérisé en ce que** le bloc porteur (17 ; 217) comprend un manchon creux (35 ; 135) ouvert à une extrémité supérieure, présentant intérieurement un évidement principal (43) dont la partie inférieure (47 ; 247) est de forme complémentaire d'une partie d'extrémité (27 ; 227) du premier élément (15 ; 215), l'évidement principal (43) ayant un fond (49 ; 249) du côté inférieur qui définit une butée d'insertion, et un col d'entrée (51 ; 251) donnant accès à ladite partie inférieure (47 ; 247) de l'évidement suivant la direction d'enclenchement (X), le col (51 ; 251) étant déformable élastiquement et définissant un cran d'enclenchement du premier élément (15 ; 215) dans le deuxième élément (3, 17 ; 203, 216, 217).

5. Dispositif suivant la revendication 4, **caractérisé en ce que** le manchon (35 ; 135) est pourvu d'au moins un passage (55 ; 154, 155) d'évacuation d'eau mettant en communication l'évidement principal (43) et l'extérieur du manchon.

6. Dispositif suivant la revendication 5, **caractérisé en ce qu'**il comprend une pluralité de passages (55 ; 154, 155) répartis régulièrement autour de l'axe (X) du manchon (35 ; 135) sur sa périphérie intérieure.

7. Dispositif suivant la revendication 5 ou 6, **caractérisé en ce que** lesdits passages (55) sont des orifices qui s'étendent chacun selon une direction inclinée par rapport à l'axe (X) du manchon (35), radialement vers l'extérieur du haut vers le bas.

8. Dispositif suivant l'une quelconque des revendications 5 à 7, **caractérisé en ce que** lesdits passages (154, 155) comportent un orifice central (154) formé dans le fond (49) du manchon (135), et des gorges (155) formées sur une paroi interne dudit manchon (135) et convergeant vers ledit orifice (154) en débouchant dans ce dernier.

9. Dispositif suivant l'une quelconque des revendications 4 à 8, **caractérisé en ce que** l'entrée de l'évidement principal (43) est évasée de façon à assurer le guidage du premier élément de fixation (15 ; 215) lors de son enclenchement dans le deuxième élément (3, 17 ; 203, 216, 217).

10. Dispositif suivant l'une quelconque des revendications 1 à 9, **caractérisé en ce que** ledit deuxième élément (3, 17 ; 203, 216, 217) assure une liaison déformable entre le premier élément (15 ; 215) et la partie de caisse (60 ; 260), et le deuxième élément (3, 17 ; 203, 216, 217) est pourvu d'un organe d'amortissement (37 ; 237) interposé entre le premier élément et la partie de caisse (60 ; 260), de façon à se déformer en compression lors d'un choc sur le mécanisme d'essuie-vitre (1 ; 201) dans une direction d'accouplement (X) des premier (15 ; 215) et deuxième (3, 17 ; 203, 216, 217) éléments de fixation.

11. Dispositif suivant la revendication 10, **caractérisé en ce que** l'organe d'amortissement comprend un bloc d'amortissement compressible (37 ; 237), notamment en mousse, fixé à l'extrémité inférieure du manchon (35 ; 135), et destiné à porter sur la partie de caisse (60 ; 260) et à amortir, en se déformant en compression, un enfoncement du bloc porteur (17 ; 217) vers la partie de caisse (60 ; 260).

12. Dispositif suivant l'une quelconque des revendications 1 à 11, **caractérisé en ce** le bloc porteur (17) comporte intérieurement une gorge périphérique (50) qui s'étend de façon que la section du bloc porteur entre le fond de ladite gorge (50) et la surface extérieure du bloc porteur définisse une section de moindre épaisseur, et ainsi une région frangible sous l'effet d'un choc.

13. Dispositif selon l'une quelconque des revendications 1 à 12, **caractérisé en ce que** le deuxième élément (203, 216, 217) comprend un support rigide de fixation (203), solidaire de la partie de caisse (260), un bloc porteur (217) complémentaire dudit premier élément (215), et un organe intermédiaire frangible (216) fixé d'une part audit support (203) et d'autre part audit bloc porteur (217), de façon à pouvoir assurer entre ces derniers une liaison frangible sous l'effet d'un choc sur le mécanisme d'essuie-vitre (201) dont l'intensité dépasse un seuil prédéterminé.

14. Dispositif suivant la revendication 13, **caractérisé en ce que** l'organe intermédiaire (216) est fixé sur le support rigide (203) par des moyens d'encliquetage (221, 225) selon une direction d'encliquetage (Y) sensiblement orthogonale à la direction d'enclenchement (X).

15. Dispositif suivant la revendication 14, **caractérisé en ce que** l'organe intermédiaire (216) comprend des glissières (224A, 224B) pouvant s'engager avec des bords correspondants (220A, 220B) du support rigide (203) selon la direction d'encliquetage (Y).

16. Dispositif suivant l'une quelconque des revendications 13 à 15, **caractérisé en ce que** l'organe intermédiaire comprend une plaque (216) qui présente une ouverture au travers de laquelle s'étend le bloc porteur (217) fixé sur ladite plaque (216).

17. Dispositif suivant la revendication 16, **caractérisé en ce que** l'organe intermédiaire (216) est formé avec une ligne d'affaiblissement (223) définissant la région frangible, qui s'étend de façon périphérique par rapport au bloc porteur (217).

18. Dispositif suivant l'une quelconque des revendications 13 à 17, **caractérisé en ce que** l'organe intermédiaire (216) est réalisé en matière plastique.

19. Dispositif suivant l'une quelconque des revendications 13 à 18, **caractérisé en ce que** le bloc porteur (217) est surmoulé sur l'organe intermédiaire (216).

20. Dispositif suivant l'une quelconque des revendications 1 à 9 et 11 à 19, **caractérisé en ce** le bloc porteur (17 ; 217) est réalisé au moins partiellement en matériau élastomère, notamment en caoutchouc.

21. Dispositif suivant l'une quelconque des revendications 1 à 20, **caractérisé en ce que** les blocs porteurs (17 ; 217) des deuxièmes éléments de fixation des paires sont tous identiques.

22. Dispositif suivant l'une quelconque des revendications 1 à 21, **caractérisé en ce que** les premiers éléments de fixation (15 ; 215) des paires sont tous identiques.

23. Dispositif suivant l'une quelconque des revendications 1 à 22, **caractérisé en ce que** le premier élément (15 ; 215) de chaque paire est un bras en saillie du mécanisme d'essuie-vitre (1 ; 201) dans la direction d'enclenchement (X), muni à son extrémité libre d'une rotule (27 ; 227) complémentaire du deuxième élément correspondant.

24. Véhicule automobile comprenant une partie de caisse (60 ; 260), et un mécanisme d'essuie-vitre (1 ; 201) fixé sur ladite partie de caisse (60 ; 260), **caractérisé en ce qu'**il comprend un dispositif de positionnement et de fixation selon l'une quelconque des revendications 1 à 23, au moyen duquel ledit mécanisme d'essuie-vitre (1 ; 201) est fixé sur ladite partie de caisse (60 ; 260).

## Claims

1. Arrangement for positioning and fastening a windscreen wiper mechanism on a motor vehicle body section, comprising three pairs of elastically interlocking fastening elements, each of which comprises a first fastening element (15; 215) integral to the windscreen wiper mechanism (1; 201) and a second fastening element (3, 17; 203, 216, 217) integral to the body section (60; 260), said pairs forming elastic catch connections in the same coupling direction (X), in particular in a direction essentially oriented from the outside to the inside of the body, the second element (3, 17; 203, 216, 217) comprising a rigid fastening support (3; 203) integral to the body section (60; 260) and a support block (17; 217) fastened to said support (3; 203) and made of at least one more flexible material, **characterised in that** the support block (17) is fastened to the rigid support (3) such that it can be detached at least partially therefrom under the effect of an impact on the windscreen wiper mechanism (1) of an intensity exceeding a predetermined threshold, and **in that** the rigid fastening support (3) has an opening, the edge of which forms a collar (21), whereas the-support block (17) has a peripheral groove (31) on the outside, which can engage into the collar (21) to form the fastening of the support block (17) on the rigid support (3).

2. Arrangement according to Claim 1, **characterised in that** the three pairs of fastening elements are arranged in such a way as to define three non-aligned fastening points.

3. Arrangement according to Claim 1 or 2, **characterised in that** the first (15; 215) and second (3, 17; 203, 216, 217) fastening elements of the same pair have complementary parts (27, 47; 227, 247), the shape of which is for rotation relative to the engagement direction (X).

4. Arrangement according to any one of Claims 1 to 3, **characterised in that** the support block (17; 217) comprises a hollow sleeve (35; 135), which is open at an upper end and on the inside has a main recess (43), the inside section (47; 247) of which has a complementary shape to an end section (27; 227) of the first element (15; 215), said main recess (43) having a base (49; 249) on the lower side, which defines an insertion stop, and an inlet neck (51; 251) giving access to said lower section (47; 247) of the recess in the coupling direction (X), wherein the neck (51; 251) is elastically deformable and defines a wedge for locking the first element (15; 215) into the second element (3, 17; 203, 216,217).

5. Arrangement according to Claim 4, **characterised in that** the sleeve (35; 135) is provided with at least one water outlet passage (55; 154, 155) connecting the main recess (43) and the outside of the sleeve.

6. Arrangement according to Claim 5, **characterised in that** it comprises a plurality of passages (55; 154, 155) uniformly distributed around the axis (X) of the sleeve (35; 135) on its inner periphery.

7. Arrangement according to Claim 5 or 6, **characterised in that** said passages (55) are orifices, which each extend in a direction that is inclined relative to the axis (X) of the sleeve (35) radially from the top downwards to the outside.

8. Arrangement according to any one of Claims 5 to 7, **characterised in that** said passages (154, 155) comprise a central orifice (154) formed in the base (49) of the sleeve (135) and channels (155) formed on the inside wall of said sleeve (135) and converging towards said orifice (154) to open into this.

9. Arrangement according to any one of Claims 4 to 8, **characterised in that** the entrance of the main recess (43) is widened in order to assure guidance of the first fastening element (15; 215) when it is locked into the second element (3, 17; 203, 216, 217).

10. Arrangement according to any one of Claims 1 to 9, **characterised in that** said second element (3, 17; 203, 216, 217) assures a deformable connection between the first element (15; 215) and the body section (60, 260), and the second element 3, 17; 203, 216, 217) is provided with a damping means (37; 237) interposed between the first element and the body section (60; 260) in order to deform by compressing in the event of an impact on the windscreen wiper mechanism (1; 201) in a coupling direction (X) of the first (15; 215) and second (3, 17; 203, 216, 217) fastening elements.

11. Arrangement according to Claim 10, **characterised in that** the damping means comprises a compressible damping block (37; 237), in particular made of foam, which is secured to the lower end of the sleeve (35; 135) and intended to bear against the body section (60; 260) and to damp, by compressing, any sinking of the support block (17; 217) towards the body section (60; 260).

12. Arrangement according to any one of Claims 1 to 11, **characterised in that** on the inside the support block (17) has a peripheral channel (50) extending in such a way that the section of the support block between the base of said channel (50) and the outer surface of the support block defines a section of smaller thickness and thus an area that can break away under the effect of an impact.

13. Arrangement according to any one of Claims 1 to 12, **characterised in that** the second element (203, 216, 217) comprises a rigid fastening support (203) integral to the body section (260), a support block (217) complementary to said first element (215), and an intermediate break-away means (216) secured on one side to said support (203) and on the other side to said support block (217), such that between these latter elements a break-away connection can be assured under the effect of an impact on the windscreen wiper mechanism (201) with an intensity exceeding a predetermined threshold.

14. Arrangement according to Claim 13, **characterised in that** the intermediate means (216) is secured to the rigid support (203) by catch means (221, 225) in a lock-in direction (Y) essentially orthogonal to the coupling direction (X).

15. Arrangement according to Claim 14, **characterised in that** the intermediate means (216) comprises slide faces (224A, 224B), which can engage with the corresponding edges (220A, 220B) of the rigid support (203) in the lock-in direction (Y).

16. Arrangement according to any one of Claims 13 to 15, **characterised in that** the intermediate means comprises a plate (216) having an opening, through which the support block (217) secured onto said plate (216) extends.

17. Arrangement according to Claim 16, **characterised in that** the intermediate means (216) is formed with a break line (223) defining the break-away area, which extends peripherally in relation to the support block (217).

18. Arrangement according to any one of Claims 13 to 17, **characterised in that** the intermediate means (216) is made of plastic material.

19. Arrangement according to any one of Claims 13 to 18, **characterised in that** the support block (217) is moulded on the intermediate means (216).

20. Arrangement according to any one of Claims 1 to 9 and 11 to 19, **characterised in that** the support block (17; 217) is made at least partially of elastomeric material, in particular rubber.

21. Arrangement according to any one of Claims 1 to 20, **characterised in that** the support blocks (17; 217) of the second fastening elements of the pairs are all identical.

22. Arrangement according to any one of Claims 1 to 21, **characterised in that** the first fastening elements (15; 215) of the pairs are all identical.

23. Arrangement according to any one of Claims 1 to 22, **characterised in that** the first element (15; 215) of each pair is an arm of the windscreen wiper mechanism (1; 201) projecting in the coupling direction (X) and fitted with a ball (27; 227) complementary to the corresponding second element.

24. Motor vehicle comprising a body section (60; 260) and a windscreen wiper mechanism (1; 201) secured on said body section (60; 260), **characterised in that** it comprises a positioning and fastening arrangement according to any one of Claims 1 to 23, by means of which said windscreen wiper mechanism (1; 201) is secured to said body section (60, 260).

## Patentansprüche

1. Anordnung zur Positionierung und Befestigung eines Scheibenwischermechanismus an einem Karosserieteil eines Kraftfahrzeugs, mit drei Paaren von Befestigungselementen, die mit elastischer Einrastung arbeiten und von denen jedes ein erstes Befestigungselement (15; 215) aufweist, das an dem Scheibenwischermechanismus (1; 201) angebracht ist, und ein zweites Befestigungselement (3, 17; 203, 216, 217), das an dem Karosserieteil (60; 260) angebracht ist, wobei die genannten Paare Rastverbindungen durch elastische Einrastung in einer gemeinsamen Einkupplungsrichtung (X) bilden, insbesondere einer Richtung, die im wesentlichen von außen zum Inneren der Karosserie verläuft, wobei das zweite Element (3, 17; 203, 216, 217) einen mit dem Karosserieteil (60; 260) verbundenen starren Befestigungssockel (3; 203) und einen an dem genannten Sockel (3; 203) befestigten Tragblock (17, 217) aufweist, der aus wenigstens einem weicheren Material hergestellt ist, **dadurch gekennzeichnet, daß** der Tragblock (17) so an dem starren Sockel (3) befestigt ist, daß er sich unter der Wirkung eines auf den Scheibenwischermechanismus (1) ausgeübten Stoßes, dessen Stärke einen bestimmten Schwellenwert übersteigt, zumindest zum Teil von dem Sockel löst, und daß der starre Befestigungssockel (3) eine Öffnung aufweist, deren Rand einen Kragen (21) bildet, während der Tragblock (17) außen eine in Umfangsrichtung verlaufende Nut (31) aufweist, die mit dem Kragen (21) in Eingriff treten kann, um die Befestigung des Tragblockes (17) an dem starren Sockel (3) zu erreichen.

2. Anordnung nach Anspruch 1, **dadurch gekennzeichnet, daß** drei Paare von Befestigungselementen so angeordnet sind, daß sie drei nicht miteinander ausgerichtete Befestigungspunkte bilden.

3. Anordnung nach Anspruch 1 oder 2, **dadurch gekennzeichnet, daß** die ersten (15; 215) und zweiten (3, 17; 203, 216, 217) Befestigungselemente desselben Paares komplementäre Teile (27, 47; 227, 247) haben, die die Form von Rotationskörpern in Bezug auf die Einkupplungsrichtung (X) haben.

4. Anordnung nach einem der Ansprüche 1 bis 3, **dadurch gekennzeichnet, daß** der Tragblock (17; 217) einen hohlen Stutzen (35; 135) aufweist, der an einem oberen Ende offen ist und innen eine Haupthöhlung (43) bildet, deren unterer Teil (47; 247) eine zu einem Endabschnitt (27; 227) des ersten Elements (15; 215) komplementäre Form hat, wobei die Haupthöhlung (43) auf der Unterseite einen Boden (49, 149) hat, der beim Einführen einen Anschlag bildet, und einen Einlaßhöcker (51; 251), der in der Einkupplungsrichtung (X) Zugang zu dem genannten unteren Teil (47; 247) der Höhlung gewährt und elastisch verformbar ist und einen Einrastwulst zur Verrastung des ersten Elements (15; 215) in dem zweiten Element (3; 17; 203, 216, 217) bildet.

5. Anordnung nach Anspruch 4, **dadurch gekennzeichnet, daß** der Stutzen (35; 135) wenigstens einen Kanal (55; 154; 155) zur Ableitung von Wasser hat, der die Haupthöhlung(43) mit dem Äußeren des Stutzens verbindet.

6. Anordnung nach Anspruch 5, **dadurch gekennzeichnet, daß** sie mehrere gleichmäßig um die Achse (X) des Stutzens (35; 135) auf dessen innerem Umfang verteilte Kanäle (55; 154; 155) aufweist.

7. Anordnung nach Anspruch 5 oder 6, **dadurch gekennzeichnet, daß** die genannten Kanäle (55) Öffnungen sind, die sich jeweils in einer in Bezug auf die Achse (X) des Stutzens (35) geneigten Richtung radial nach außen von oben nach unten erstrecken.

8. Anordnung nach einem der Ansprüche 5 bis 7, **dadurch gekennzeichnet, daß** die genannten Kanäle (154, 155) eine in dem Boden (49) des Stutzens (135) gebildete zentrale Öffnung (154) und Nuten (155) umfassen, die in einer Innenwand des genannten Stutzens (135) gebildet sind und zu der genannten Öffnung (154) konvergieren und in diese münden.

9. Anordnung nach einem der Ansprüche 4 bis 8, **dadurch gekennzeichnet, daß** der Einlaß der Haupthöhlung (43) so erweitert ist, daß er dem ersten Befestigungselement (15; 215) bei seinem Einrasten in das zweite Element (3, 17; 203, 216, 217) Führung gibt.

10. Anordnung nach einem der Ansprüche 1 bis 9, **dadurch gekennzeichnet, daß** das genannte zweite Element (3, 17; 203, 216, 217) eine verformbare Verbindung zwischen dem ersten Element (15; 215) und dem Karosserieteil (60; 260) ermöglicht und das zweite Element (3, 17; 203, 216, 217) ein Dämpfungsorgan (37; 137) aufweist, das zwischen dem ersten Element und dem Karosserieteil (60; 260) eingefügt ist, so daß es sich unter Kompression verformt, wenn ein Stoß in der Richtung (X), in der die ersten (15; 215) und zweiten (3, 17; 203, 216, 217) Befestigungselemente miteinander in Eingriff gebracht werden, auf den Scheibenwischermechanismus (1, 201) ausgeübt wird.

11. Anordnung nach Anspruch 10, **dadurch gekennzeichnet, daß** das Dämpfungsorgan einen kompressiblen Dämpfungsblock (37; 237), insbesondere aus Schaumstoff aufweist, der am unteren Ende des Stutzens (35; 135) befestigt und dazu bestimmt ist, den Tragblock (17; 217) auf dem Karosserieteil (60; 260) abzustützen und, unter Kompressionsverformung, ein Einrammen des Tragblockes in Richtung auf das Karosserieteil (60; 260) zu dämpfen.

12. Anordnung nach einem der Ansprüche 1 bis 11, **dadurch gekennzeichnet, daß** der Tragblock (17) im Inneren eine in Umfangsrichtung verlaufende Hohlkehle (50) aufweist, die sich so erstreckt, daß der Querschnitt des Tragblockes zwischen dem Grund der genannten Hohlkehle (50) und der äußeren Oberfläche des Tragblockes einen Abschnitt mit verringerter Dicke und somit einen unter der Wirkung eines Stoßes zerbrechlichen Bereich bildet.

13. Anordnung nach einem der Ansprüche 1 bis 12, **dadurch gekennzeichnet, daß** das zweite Element (203, 216, 217) einen starren Befestigungssockel (203), der mit dem Karosserieteil (260) verbunden ist, einen zu dem genannten ersten Element (215) komplementären Tragblock (217) und ein zerbrechbares Zwischenelement (216) aufweist, das einerseits an dem genannten Sokkel (203) und andererseits an dem genannten Tragblock (217) befestigt ist, derart, daß es zwischen diesem letzteren eine unter der Wirkung eines auf dem Scheibenwischermechanismus (201) ausgeübten Stoßes, dessen Stärke einen vorbestimmten Schwellenwert überschreitet, zerbrechbare Verbindung bildet.

14. Anordnung nach Anspruch 13, **dadurch gekennzeichnet, daß** das Zwischenelement (216) an dem starren Sockel (203) mit Rastmitteln (221, 225) befestigt ist, zur Verrastung in einer Einrastrichtung (Y), die zu der Einkupplungsrichtung (X) im wesentlichen orthogonal ist.

15. Anordnung nach Anspruch 14, **dadurch gekennzeichnet, daß** das Zwischenelement (216) Gleitschienen (224A, 224B) aufweist, die mit entsprechenden Rändern (220A, 220B) des starren Sockels (203) in der Einkupplungsrichtung (Y) in Eingriff treten können.

16. Anordnung nach einem der Ansprüche 13 bis 15, **dadurch gekennzeichnet, daß** das Zwischenelement eine Platte (216) aufweist, die eine Öffnung bildet, durch welche der an dieser Platte (216) befestigte Tragblock (216) hindurchgeht.

17. Anordnung nach Anspruch 16, **dadurch gekennzeichnet, daß** das Zwischenelement (216) eine Sollbruchlinie (223) aufweist, die den zerbrechbaren Bereich bildet, der in Umfangsrichtung des Tragblockes (217) verläuft.

18. Anordnung nach einem der Ansprüche 13 bis 17, **dadurch gekennzeichnet, daß** das Zwischenelement (216) aus Kunststoff hergestellt ist.

19. Anordnung nach einem der Ansprüche 13 bis 18, **dadurch gekennzeichnet, daß** der Tragblock (217) an das Zwischenelement (216) angeformt ist.

20. Anordnung nach einem der Ansprüche 1 bis 9 und 11 bis 19, **dadurch gekennzeichnet, daß** der Tragblock (17; 217) wenigstens zum Teil aus einem elastomeren Material, insbesondere aus Gummi hergestellt ist.

21. Anordnung nach einem der Ansprüche 1 bis 20, **dadurch gekennzeichnet, daß** die Tragblöcke (17; 217) der zweiten Befestigungselemente der Paare alle identisch sind.

22. Anordnung nach einem der Ansprüche 1 bis 21, **dadurch gekennzeichnet, daß** die ersten Befestigungselemente (15; 215) der Paare alle identisch sind.

23. Anordnung nach einem der Ansprüche 1 bis 22, **dadurch gekennzeichnet, daß** das erste Element (15; 215) jedes Paares ein Arm ist, der von dem Scheibenwischermechanismus (1, 201) in der Einkupplungsrichtung (X) vorspringt und an seinem freien Ende eine Kugel (27; 227) trägt, die zu dem entsprechenden zweiten Element komplementär ist.

24. Kraftfahrzeug mit einem Karosserieteil (60; 260) und einem Scheibenwischermechanismus (1, 201), der an dem genannten Karosserieteil (60; 260) befestigt ist, **dadurch gekennzeichnet, daß** es eine Positionierungs- und Befestigungsanordnung nach einem der Ansprüche 1 bis 23 aufweist, mit deren Hilfe der genannte Scheibenwischermechanismus (1; 201) an dem genannten Karosserieteil (60; 260) befestigt ist.
